# EUROPEAN PATENT SPECIFICATION

(11) **EP 1 627 338 B1**
(45) Date of publication and mention of the grant of the patent: **13.01.2010**
(21) Application number: 04731803.5
(22) Date of filing: 07.05.2004
(51) Int. Cl.: G06F 19/00, A63C 19/00

(54) **MARKING OF LARGE SURFACES WITH VISUAL PRESENTATIONS**
MARKIEREN GROSSER OBERFLÄCHEN MIT SICHTBAREN DARSTELLUNGEN
MARQUAGE DE SURFACES LARGES AVEC DES PRESENTATIONS VISUELLES

(30) Priority: 07.05.2003 SE 0301332; 07.05.2003 SE 0301331; 08.05.2003 US 468652 P; 08.05.2003 US 468653 P
(43) Date of publication of application: 22.02.2006
(73) Proprietor: Evenzo Ab, 184 33 Åkersberga (SE)
(72) Inventor: PERSSON, Thord, S-184 33 Akersberga (SE); ZANDERLEHN, Karri, S-592 92 Vadstena (SE)
(74) Representative: Krahbichler, Erik
(86) International application number: PCT/SE2004/000704
(87) International publication number: WO 2004/100044

(56) References cited:
- WO-A1-01/27392
- WO-A1-02/076562
- GB-A- 2 361 572
- US-A- 5 540 516
- US-B1- 6 299 934

## Description

### Field of the Invention

This invention pertains in general to the field of marking of surfaces by visual presentations and more particularly to the marking of large surfaces by visual presentations, and even more particularly to the generation of visual presentations on large substantially plane surfaces by means of a free-roaming marking device.

### Background of the Invention

Marking of large surfaces with visual presentations, such as images, is applied in many fields of use. Up to now, such markings were of rather simple nature or relatively limited in size. For instance, various sports events that are performed on large surfaces reach a large number of TV viewers simultaneously by TV-broadcasts. These large surfaces may be marked with visual presentations of e.g. commercial messages, such as logotypes. One idea is to bend the grass straws in order to create the messages in the grass covered surfaces without disturbing the events.

A method and apparatus for marking grass fields is disclosed in US-5 540 516. An advertisement is displayed on grass sports fields by bending grass blades in definite zones and bending or leaving grass blades straight in other zones in order to form an image or a word. The difference in the direction given to the grass blades is visible to the spectators watching the sports event on the sports field location. The grass blades are directed by means of a mobile, though large, i.e. not portable, apparatus, which runs on the grass surface. The apparatus also has a plurality of brushes and/or additional rollers, which rotate to straighten the grass blades in definite sectors/zones. The sectors, which are created, form an image or the letters of words. These sectors may be compared to pixels of bitmap graphics. This disclosure suffers from the disadvantage that the images thus created are very rough and have a low resolution, i.e. they have a very large pixel size. This is caused by the fact that the sectors or pixels are relatively large rectangular sections of a certain minimal size, e.g. approximately 1 m x 1 m or larger, and the created image is thus very coarse. Furthermore the brushes are all oriented in the same direction of movement. Thus it is not possible to have different grass bending direction in different sectors/pixels. Finally the brushes are moved over the grass surface in parallel adjacent lines, which limits the degree of movement of the brushes and limits the shape of the pixels to rectangular sectors. Therefore the images differ a lot from the original images which are to be reproduced on the grass field. Furthermore, the letters of the words are limited to a substantially rectangular shape and it is not possible to exactly reproduce defined logotypes. This is a major disadvantage as the logotypes of many commercial messages, such as company names, trademarks or brand names are recognised by the visual information comprised in the visual presentation of special logotypes, which are related to these company names or brand names. Thus these messages, which are to be send to the viewers by means of the visual presentation, is difficult or impossible to create by the method and apparatus of US-5 540 516.

Another method of forming indicia on a grass surface is disclosed in GB-2361572. This method comprises rolling the grass of the grass surface in one direction and rolling selected areas of the grass in a different direction to create the desired image of the indicia. A suitably shaped template made of flexible plastic or rubber sheet is pegged out at appropriate positions over the grass surface in order to prevent areas to be rolled. Thus two areas with grass rolled in two different directions are created. The areas have smooth edges and do not suffer from the above described reproduction problems. However, this method involves long production times as it is complicated to implement. It is also impossible to adapt the size of messages to be created in the grass surface on location as new templates have to be manufactured for different message sizes. Furthermore the size of messages to be created by this method is very limited, as the templates become impossible to handle over a certain size because they are made of a 5 mm thick plastic material. It is certainly impossible to create messages of a size of e.g. 20 x 20 meters or larger, although this is highly desirable in certain applications.

Another approach is to generate visual presentations by marking large surfaces with paint. US-5 453 931 discloses a mobile robot for marking reference lines on large surfaces in the construction and manufacturing industries. The mobile robot is a navigation robot with a reference line plotter. The mobile robot produces physical layout and reference lines or performs work on a plane surface. The mobile robot has an emission system for marking of a large surface with reference lines. The robot locates and treats desired co-ordinates with emission means, such as an ink jet type marking system, located on the robots' underside. Markings are applied when the robot traverses a programmed path or when it is stationary. Furthermore, an operator can train the robot by manually steering the robot along a desired path. The robot of US-5 453 931 is capable of marking a large surface by creating a set of lines in different colours. It is mentioned that a design can be laid out for boundary lines or mascot images can be drawn on sports fields. However, the robot and method have the drawback that all-over images within the outline are not generated. This is a major disadvantage, as a set of line drawings cannot replace a full-scale high-resolution image.

Furthermore, the line drawing system for registering or generating the paths of travel is completely dependent on manual operation, either by steering the robot manually or by entering the co-ordinates manually. This is a time consuming and expensive procedure.

In addition, the mobile robot is only capable of travelling along straight lines. When changing direction, marking has to be interrupted. The robot is re-positioned by positioning the robot on pods and lifting the undercarriage and re-adjusting the undercarriage to a new direction. Thus, the robot has the disadvantage that it cannot travel on curved lines and it is cumbersome and slow when performing a task that requires a lot of directional changes, as e.g. a circle line. Consequently, it is impossible to generate high quality visual presentations with the robot disclosed in US-5 453 931.

In addition, according to the prior art, the image or text on the large surface is exclusively arranged depending on the geometrical size and form of the surface. The creation does not take into consideration where a TV-camera is positioned in relation to the visual presentation. Thus the marking may be difficult to identify when viewed from certain camera-angles because the marking on the field is applied irrespective of a desired viewing angle or perspective distortions resulting from the position of the TV-camera relative to the marking on the large surface. Furthermore, the created visual presentations may be impossible to distinguish from the surrounding surface material, e.g. due to perspective distortions of the image or text in relation to the camera position or the camera angle, respectively.

Another common problem when creating visual presentations on large surfaces is that of long production times. The surfaces on which visual presentations are to be created are often frequently used and thus not readily available for production of a message on the large surface. A typical example is a runway at an airport.

WO02076562 discloses an automatic ground marking apparatus traversing the ground of a large surface and marking the surface at predetermined points to mark out a predetermined sign on the ground. However, the apparatus is purely based on marking point after point and repositioning the apparatus between the points. This involves long production times for generating the sign on the ground.

Hence, with regard to the available prior art, there is a need for a system creating visual presentations on large surfaces with a compact device, extremely short production times, a high degree of reproduction, on site flexibility concerning adjustments of the visual presentation on production location and optimisation of the created visual presentation concerning broadcasting via TV.

### Summary of the Invention

The present invention overcomes the above-identified deficiencies in the art and solves at least the above identified problems by providing a method, a system, use of a mobile robot, and a computer-readable medium for creating presentations on large surfaces, according to the appended patent claims.

The general solution according to the invention is to use a free-roaming device, such as a mobile robot, for creating visual presentations on large surfaces.

According to one aspect of the invention, there is disclosed a method of creating a visual presentation on a substantially plane large surface by means of at least one free-roaming marking device. Said free-roaming marking device travels along trajectories on said surface in such a way that at least one contour line of the visual presentation is passed on the large surface, preferably a flat surface such as asphalt, concrete or grass- covered surface, a substantially horizontally arranged large floor or a flat roof of a building. Alternatively the visual presentation is created on a foundation material, which is removable from the surface and may be transported to a target location, where it is more permanently attached to a large surface. Such a material is e.g. a textile fabric. Based on a vectorised image the robot traverses trajectories and deposits a material, such as colour, with high precision onto the surface. This is achieved by treating the surface along contour lines of the visual presentation by means of the free-roaming marking device travelling along trajectories.

The free-roaming marking device travels thus along trajectories marking contour lines of a visual presentation to be created on the large surface. The contour lines are preferably based on vector graphics. When the contour lines have been created, the surface inside or outside the contour lines are treated. Thus, the visual presentation such as a logotype is created on the large surface. The visual presentation may be optimised for TV-broadcast, i.e. the visual presentation is optimised with regard to an image capturing device such as a TV-camera and with regard to the TV cameras'position, i.e. viewing angle and distance from the visual presentation to the TV-camera.

According to a preferred embodiment of the invention, grass is bent in different directions in order to generate contrasts in grass covered surfaces. For instance, grass that is bent away from a TV-camera results in a high reflectivity and a bright appearance. As the grass may be bent 360° orientations, a variety of bright/dark contrasts are used to optimise the appearance of the visual presentation towards TV broadcasts.

According to another aspect of the invention, there is provided a system for generation of visual presentations on large surfaces, wherein the system comprises a free-roaming marking device adapted to creating said visual presentations by treating said surface. The free-roaming marking device travels, in use, along trajectories on the surface and treats the surface along contour lines of the visual presentation when passing along the trajectories. For this purpose the free-roaming device comprises a treatment means for treating the surface when travelling along the trajectories. Furthermore, the system comprises a calculation means for automatically calculating the trajectories from a source data representing the visual presentation, and preferable a portable computing device for wireless communication with the free-roaming marking device and for programming and controlling the free-roaming marking device at site where the visual presentation is to be created.

According to yet another aspect of the invention there is provided a use of a mobile robot as a free-roaming marking device for generation of visual presentations on large surfaces, wherein said free-roaming marking device marks contour lines of visual presentations on the large surfaces.

According to a further aspect of the invention, there is provided a computer-readable medium having embodied thereon a computer program for processing by a computer. The computer program comprises code segments for generation of visual presentations on large surfaces. A first code segment calculates trajectories along which a free-roaming marking device travels for creating said visual presentation, wherein said trajectories are automatically computed from a source data representing said visual presentation. Preferably a second code segment instructs the free-roaming marking device to travel along trajectories on said surface in such a way that at least one contour line of said visual presentation is created on said large surface by treating said surface along contours of said visual presentation with said free-roaming marking device when travelling along said trajectories.

The present invention has among others the following advantages over the prior art:
- a remotely programmable self-propelled robot is provided, which autonomously and automatically performs the creation of contour lines of visual presentations on large surfaces,
- the fully-automatic creation of an over-all visual presentation may be performed,
- no manual operation is required for the generation of paths of travel of said free-roaming marking device for generation of visual presentations on large surfaces,
- visual presentations are automatically generated by automatic calculation of paths to travel (trajectories) by the robot for generating the contour lines of said visual presentation,
- surfaces inside or outside thus generated contour lines are treated fully-automatically in order to result in all-over treated interior or exterior areas of visual presentations,
- visual presentations are scalable and deliver thus high-quality visual presentations independently of the size of the presentation to be created, i.e. the size of the visual presentation is automatically adapted to different area sizes without loss of perceptibility, scale or further visual information comprised in the created visual presentation on the large surface,
- the automatic generation and thus the visual presentation may be adapted to a camera position, i.e. viewing angle and distance, for optimised perceptibility and perspective correctness of the visual presentation with respect to especially TV-broadcasts,
- the visual presentation thus created has a high resolution and high quality, due to naturally reproduced visual presentations independent of surface properties of the large surface, as well as high precision of navigation and surface treatment,
- generation of high-quality visual presentations by means of vector graphics;
- the visual presentation has a high degree of reproducibility, and
- fast production time of the visual presentations is ensured.

### Brief Description of the Drawings

Further objects, features and advantages of the invention will become apparent from the following description of embodiments of the present invention, reference being made to the accompanying drawings, in which
Fig. 1 is a perspective view of two free-roaming marking devices for depositing colour on a large surface for marking contour lines of a visual presentation according to embodiments of the invention, wherein two different nozzle positions are illustrated;
Fig. 2 is a schematic diagram illustrating the communication with a mobile robot in the system according to an embodiment of the invention for creating a visual presentation on a large surface;
Fig. 3 is flow chart over a method according to an embodiment of the invention;
Fig. 4 is a schematic diagram illustrating an embodiment of the system of the invention;
Fig. 5A is a schematic illustration of a visual presentation created by the system and method of the invention;
Fig. 5B to 5C are schematic illustrations of the creation of a visual presentation by the example of a logotype by means of a method according to an embodiment of the invention with two mobile robots according to two different embodiments of the invention;
Fig. 6 is an elevation view illustrating the adaptation of a visual presentation on'a large surface in relation to a camera position; and
Fig. 7A to 7F are a schematic illustrations showing exemplary types of markings created according to an embodiment of the method and system of the invention.

### Definition of terms

In the following section a number of terms and expressions are given in order to facilitate understanding of the present application.

A contour line is the area of a visual presentation marked on a surface. Contour lines are part of the visual presentation. Contour lines are not necessarily limited to the exterior shape boundary of a visual presentation. Moreover, a visual presentation may comprise several contour lines within the surface.

A *vector-based graphic* is described by characteristic curved lines by means of vectors. The lines of a visual presentation are also called contour lines. The contour lines are described mathematically and do not depend on the resolution of the graphics. Vector graphics are scaleable and thus adjustable to different reproduction sizes with high quality and without losing details. Vector graphics can be resized and stretched without losing quality. For instance an object can be drawn at 1 cm and resized to e.g. 50 meters without any loss of detail, unlike pixel-based raster graphics. This is based on the fact that vector graphics is a sequence of vector statements, wherein a vector is defined as representation of both a quantity and direction at the same time.

A *trajectory* is a path of travel of a free-roaming marking device.

A *logotype* is a distinctive graphical combination of alphabetic or other letters and picture elements. Logotypes are used e.g. for marketing purposes, in order to increase possibilities that a company and the products of the company are spontaneously recognised. Well-known examples are e.g. the Coca-Cola^{®} logotype, the Nike^{®} logotype or the Carlsberg^{®} logotype, shown in the exemplary drawings. Imagotypes, such as the Nike^{®} hook, are graphical symbols. They actually comprise in their graphical form an association to a company name, its brand, products and services, e.g. in the case of the Nike hook, the association is "Nike" and e.g. sportswear.

### DESCRIPTION OF EMBODIMENTS

Vector graphics is generally generated by means of input data from e.g. computer aided design (CAD) programs or a suitable graphical program, e.g. a vector based program such as Adobe Illustrator^{®}, and comprises e.g. drawings or images comprising logotypes or artwork. For transferring these to large surfaces, both outdoors and indoors, such as onto asphalt, grass, concrete, cement, stone, natural stone, textile fabrics or synthetics covered surface, road surfaces, roof surfaces, athletic field surfaces, outdoor carpets, synthetic surfaces, glass blocks, container surfaces, rubber surfaces, artificial surfaces or artificial grass, there is a lack of adequate devices and methods for the transfer of such visual presentations.

According to one embodiment of the invention, a mobile robot is used as a free-roaming marking device for creating visual presentations on large surfaces, preferably a substantially horizontal flat surface, such as an asphalt, concrete, cement, stone, natural stone, textile fabrics or synthetics covered surface, road surfaces, roof surfaces, sports fields, athletic field surfaces, outdoor carpets, synthetic surfaces, artificial surfaces such as artificial grass, glass blocks, container surfaces, rubber surfaces or grass covered surfaces, a substantially horizontally arranged large floor or a flat roof of a building. Alternatively the visual presentation is created on a foundation material, which is removable from the surface and may be transported to a target location, where it is more permanently attached to a large surface. Such a material is e.g. a textile fabric. Based on vectorised contours of a visual presentation the robot traverses trajectories based on the vector graphics and treats the surface, e.g. by depositing a material, such as coloured paint, with high precision onto the surface. Such a robot is suitable for transfer of vector graphic images to areas of a size of approximately 1 x 1 squaremeters and larger. The largest size is theoretically unlimited, and practically only limited by factors such as production time and the size of the surface. Furthermore, the visual presentation to be created, such as a logotype, artwork, drawing or image, may have any form, shape or contour within that area. It is characterised by a visual contrast, such as a colour difference, between a contour line and an interior or an exterior, respectively, of the visual presentation that is created by marking the surface.

### Creating the visual presentation

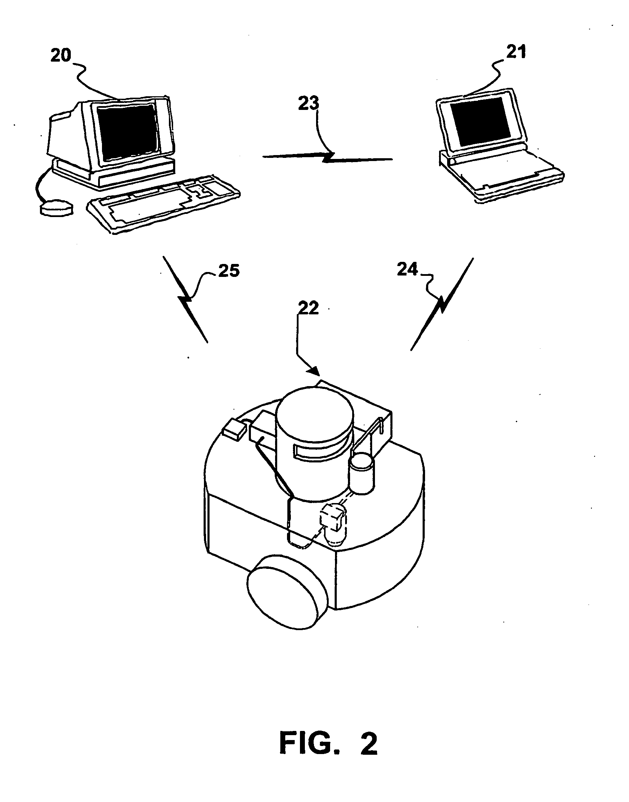

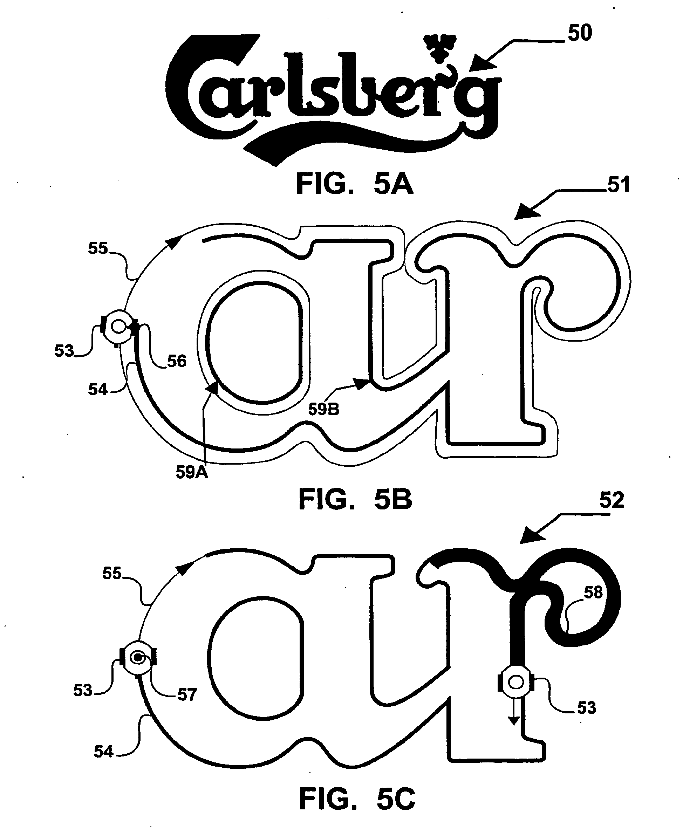

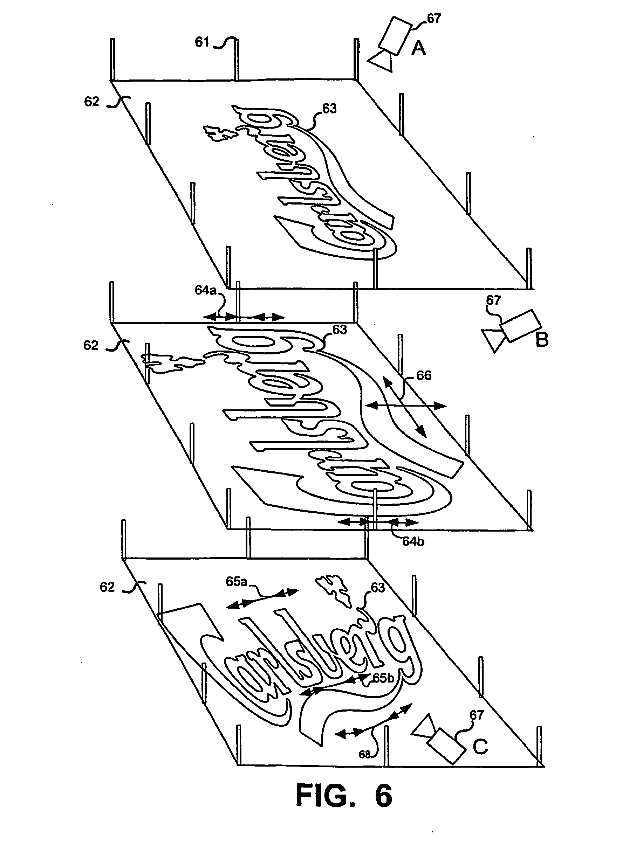

In a method according to an embodiment of the invention, the following steps are performed by a system comprising a free-roaming marking device for creating a visual presentation on a large surface, wherein the free-roaming marking device will be explained in more detail below.
1. A master data file is produced from a digitised original image of e.g. a logotype by means of a suitable graphical program, e.g. a vector based program such as Adobe Illustrator^{®}. This is preferably performed on computer 20 of the system, see Fig. 2.
2. The master data file is transferred to the portable computer 21. Alternatively the master data file is produced on the portable computing device 21.
3. The data in the master data file is adapted/optimised for a certain camera position of the location at which the visual presentation is to be created. This is preferably done on location. Optimisation is thus very effective and is performed flexible if e.g. a camera position is moved from one position A to a different position B or C with short notice. Fig. 6 illustrates this method step.
4. Vignetting is performed on the graphical master image by means of the graphical program, in case the original is a bit-map image, wherein "vignetting" is defined as marking of the contour lines of the graphical image as vector based lines.
5. The vector based contour lines representing the contour lines of the original image, are converted to a file defining working operations of the mobile robot. These working operations comprise such parameters as working order, as well as direction, speed, trajectory track and stop positions of the mobile marking device, and colour and/or marking on/off etc. A sequence of these working operations is defined in a working operations data file. The working order concerns the sequence with which the different parts of a visual presentation are treated, see Fig. 5B lines 59a and 59b.
6. The working operations data file is transmitted to the mobile robot 22. This is preferably performed by a wireless link 23, 24, 25 either directly to the mobile robot 22 (link 25), or firstly to the portable computing device 21 (link 23), e.g. wirelessly for instance via Ethernet or a cellular telephone transmission, or via a data carrier, and then further to the mobile robot 22.
7. The mobile robot 22 calibrates itself.
8. The mobile robot 22 is instructed to start processing of the working operations from the uploaded working operations data file.
9. Optionally the mobile robot 22 pre-treats the surface in order to have a defined initial condition of the surface, i.e. to create the above-mentioned foundation. In many cases it is important to have a defined foundation to create the visual presentation on. For instance, company logotypes generally have an exactly defined colour hue, e.g. the Coca-Cola logotype has a characteristic red colour tone. There are strict requirements on reproducing this colour as exact as possible. By means of creating a foundation colour on a large surface, these requirements are fulfilled by the different aspects of the invention. This foundation may e.g. be a common foundation colour within the surface to be treated. This may also be used for subsequently leaving areas untreated in order to get sub-areas of the presentation in the same colour as the foundation colour.
10. The mobile robot 22 follows the defined trajectory tracks and treats the surface by means of a surface treatment device at the correct locations in order to create the contour lines of the visual presentation. The surface treatment device is e.g. a nozzle system, as illustrated, depositing the desired amount of colour along contour lines at the correct locations on the large surface in order to create the contour lines of the visual presentation to be created. Positioning of the robot is performed by the aid of a localisation/navigation system (laser/beacons), which will be described in more detail below.
11. Subsequently, the area outside or inside the contour lines is marked by e.g. depositing paint onto the surface in order to generate the complete visual presentation representing the original image of e.g. a logotype. The surface marking is performed as described below in order to optimise the visual presentation for TV productions/ broadcasting. This step may be performed automatically by the robot or manually, e.g. as will be described below.

### Surface Marking for creating visual presentations

Figs. 5B and 5C are detailed schematic illustrations of the process of creating an exemplary visual presentation shown in Fig. 5A. The exemplary visual presentation 50 of Fig. 5A illustrates the final result of an exemplary logotype created by means of the method and system of the invention. Figs. 5B and 5C illustrate two different embodiments of a method according to the invention, wherein both embodiments are characterised by high quality and fast production time.

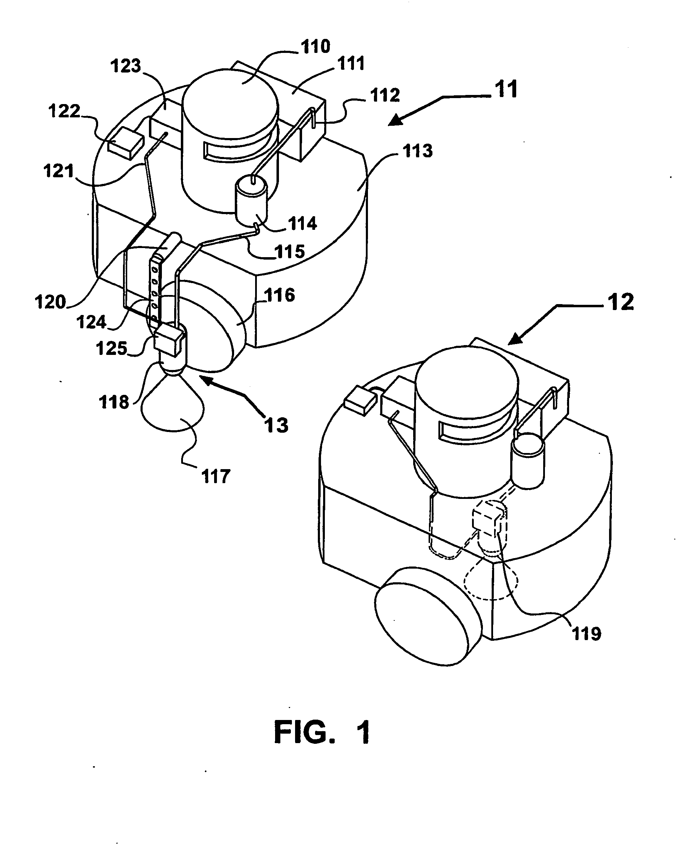

As already mentioned, Fig. 5A shows an exemplary original or master 50, i.e. a target, visual presentation being a "Carlsberg"^{®} logotype. The mobile robot 53, being of the type of mobile robot 11 shown in Fig. 1, follows a trajectory pattern 55 in the direction of a contour line 54, such as shown in Fig. 5B.

Fig. 5B illustrates the process of creating a sequence of two contour lines 59A and 59B defined as a preferred working order of a section of the visual presentation from the original 50, namely the "ar" of "Carlsberg"^{®}. Figs. 5B-5C illustrates the fully automatic generation of a visual presentation by means of the free-roaming device following trajectories and treating the surface as defined above. A visual presentation 52 under production is shown with an area 58 already treated by the free-roaming marking device 53.

Fig. 5B shows how a visual presentation 51 consisting of contour lines 54, which are created by means of the free-roaming marking device 53, such as a mobile robot. The mobile robot 53 follows trajectories, as indicated by the thin drawn line 55 in order to create the contour lines 54. As can be seen, the edges of contour line 54 are smooth and have the advantages of vector graphics. Fig. 5C describes the case of the free-roaming device having a colour marking device 57 attached in the centre of the free-roaming marking device 53 and marking contour lines of a visual presentation with subsequent treating the interior areas inside the contour lines. The interior areas may be treated manually by means of an operator using the contour lines 54 as delimiting lines of the area to be treated. In this case, the operator uses an appropriate marking device for treating the surface interior or exterior of the contour lines. Alternatively the free-roaming device treats the interior or exterior area of a visual presentation as shown in Fig. 5C. Fig. 5C illustrates both the progress of creating the visual presentation of the master 50 by treating the large surface area with contour lines 54 and the treatment of the interior 58 the contour lines 54 within the exemplary section of logotype 50. The robot 53 may also treat the area interior or exterior of the contour line first and subsequently the contour line is created to finish the creation of the visual presentation. The contour lines are integrated within the logotype. The exemplary treatment shown in Fig. 5C is, as mentioned above, performed consecutively, i.e. the interior areas are marked consecutively to marking the area inside the contour lines 54, or vice versa, in order to create a visual presentation representing the original master as perfectly as possible. Alternatively the interior areas are marked previously to marking the contour lines 54 in order to create a visual presentation representing the original master as perfectly as possible.

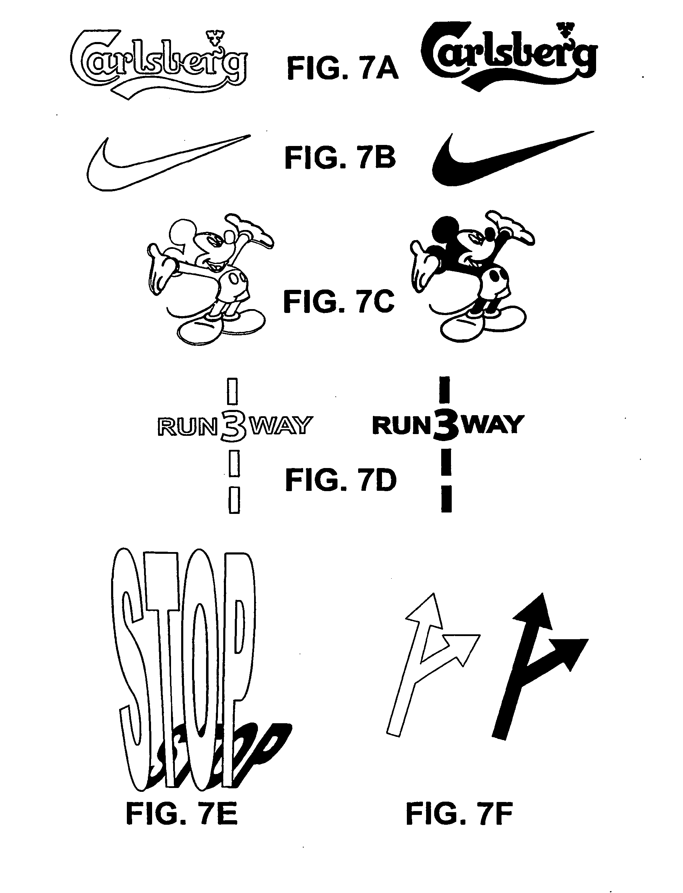

Fig. 7 shows further non-limiting examples of visual presentations created according to embodiments of the method and system of the invention. As can be seen, the invention is not limited to the creation of logotypes, but may be used for creation of other visual presentations comprising more complex artwork, drawings or images.

It is important that the contour line created with the mobile robot is created with high precision as described above. In case the contour line is drawn by the robot, it is also possible to treat the surface or apply the marking material manually, both outside and inside the contour line. Due to the high precision and the vector character of the contour line, the preciseness and time-efficiency is superior to other creating methods.

Optionally the large surface on which the visual presentation is to be created may be treated with a foundation treatment or formatting, as described above. Here, the whole surface is treated with the same treatment parameters in order to create a defined ground. This means that the surface is adjusted to a common optical parameter before the shape of the visual presentation is created. This is done in order to establish the same conditions on the whole surface to be treated, and may be compared to an optical zeroing of the surface. In the case of depositing a coloured material on a large surface area, this comprises that the area in which the visual presentation is to be created, is marked with a defined colour. Alternatively, the area may be treated with the same surface treatment parameters, for instance grass is bent in the same direction with the same degree of bending all over the foundation area of the large surface on which the visual presentation is to be created. In the following section an embodiment of a mobile robot as a free-roaming marking device according to the invention will be describe in detail.

### The Free-roaming Marking Device

The free-roaming marking system of the invention is, according to an embodiment of the invention, based on a mobile robot platform of the PIONEER^{®} mobile robot type 2-DX8, which is commercially available. Fig. 1 illustrates different embodiments based on this mobile robot type. However, this type of robot is non-limiting and any suitable mobile robot may be modified according to the invention for creating visual presentations on large surfaces. The mobile robot 11, 12 is an agile, versatile intelligent mobile robot and carries loads, such as the navigation system, or surface treatment devices, robustly. Built on a client-server core, the mobile robot has an embedded computer. Exemplary functions such as wireless Ethernet-based communications, laser navigation and GPS navigation enable autonomous functions to be performed by the mobile robot. Thus, once programmed to follow certain trajectories, the mobile robot performs this autonomously. The mobile robot runs on rechargeable hot-swappable batteries, alternatively combustion engines may be used. For collision avoidance with objects on the surface to be treated, the mobile robot has a ring with forward sonar sensors and optionally a sensor equipped rear sonar ring. The mobile robot has powerful motors and wheels. Speeds of up to 1.6 meters per second are thus obtainable. In order to maintain accurate dead reckoning data at these speeds, the mobile robot uses appropriate encoders. Its sensing moves far beyond the ordinary with e.g. laser-based navigation options, GPS, bumpers, vision, stereo rangefinders, a compass, or any arbitrary combination of these sensing means depending on the specific requirements for creating a visual presentation. The mobile robot 11, 12 comprises a body with hinged battery access door, a preferably rechargeable battery for power supply, 2 wheels, preferably with encoders, and 1 caster, motors with encoders, a front sonar ring, a microcontroller, a sonar board, a motor power board, a microcontroller server software, an user I/O bus integrated into hardware and a robotics software, a localisation & gradient navigation means. Furthermore, the mobile robot is programmable. Communication may be established with a PC client, via a wireless radio modem, as illustrated in Fig. 2 with reference to the mobile robot 22.

According to the present construction, the rugged mobile robot 11, 12, 22 has a sturdy 44cm x 38cm x 22cm aluminium body 113. The two motors of the mobile robot use 19.5:1 gear ratios and contain 500-tick encoders. This differential drive platform is highly holonomic and may rotate in place moving both wheels 116, or it may swing around a stationery wheel in a circle of 32cm radius. A rear caster (not shown) balances the robot. Being able to move holonomically means that the mobile robot may move in any direction of the surface to be treated, while simultaneously controlling rotational speed. This means that the robot is able to drive in any direction, rotate in place, or even rotate while moving along a path. Moreover, the mobile robot may climb approximately a 25% grade and sills of 2.5cm. On a flat surface, the mobile robot moves at speeds of up to 1.6 meters per second (mps). The mobile robot is balanced appropriately for effective operation.

The mobile robots hinged battery door makes hot-swapping batteries simple, though a bare mobile robot may run 18-24 hours on three fully charged batteries. With a high-capacity charger, re-charging time is very short, approximately 2 hours. Thus continuous operation for the creation of large visual presentations of any size mentioned above is ensured.

The mobile robot is equipped with an easily removable nose, which allows quick access to any optional embedded computer for addition of up to 3 PC104+ cards. The mobile robot includes a Siemens C166-based microcontroller. On the microcontroller, 8 digital inputs and 8 digital outputs plus 1 dedicated A/D port are available, wherein 4 digital inputs may be reconfigured as A/D in and 4 digital outputs may be reconfigured to PWM outputs. This user I/O is integrated into the packet structure, accessible through the system software. The A/D port and the digital channels are used for controlling the surface treatment devices, and also for other tasks, as e.g. communication to other integrated or connected systems, such as additional navigation devices.

Wireless Ethernet for wired data and video transmission to and from multiple devices enables coordination between e.g. multiple robots (for even faster production times) or a mobile robot and a PC client.

The mobile robot operates on a client-server architecture, wherein a preferred client computer is an Onboard Embedded PC. Extended EBX Form-Factor Embedded Computer with PC104+ and PCI buses Features include low-power consumption, light-weight, embedded PC104+ with PCI-enhanced IDE data transfer, flash SSD, 4 serial ports, 2 USB ports, parallel port, 6.2Gb 3.5 in. shock-mounted Hard-drive, 128 MB RAM, 2Mb DRAM and an Ethernet port. Current system speed is 800 MHz. A Linux Operating System is installed and all software is stored on a shock-mounted hard drive. A plug-n-play side panel controls for easy access to monitor, keyboard, mouse and other modular plugin hardware.

The mobile robot thus provides autonomous operation, onboard processing for laser, inertial, vision, GPS and other real-time analysis.

As illustrated in Fig. 1, a fastening device, such as an arm 124 is fixed in relation to the mobile robots' body 113, for holding an exchangeable tool. In Fig. 1, a spray paint nozzle 118 is illustrated being fastened to the arm 124. However, other tools adapted to perform marking of a large surface may equally be fastened to arm 124.

Such exchangeable tools are tools for treating the surface for creating the visual presentation by means of the robot. The type of tool is not limited to a special group of tools, but may be of any type that treats the surface in order to modify the optical properties of the surface on which the visual presentation is to be created. Optical properties refer to properties such as contrast, reflectivity, etc. Examples for tools treating the surface in order to modify the aforementioned optical properties are brushes, grass bending devices, tools for cutting grass and colour marking devices such as colour depositing nozzle devices, etc. A more specific example (not shown in the figures) is such a tool for grass bending, wherein the treatment by the tool is adjustable in terms of e.g. grass bending direction, magnitude of grass depression (degree of pressure applied on grass blades resulting in degree of bending), etc. Such a tool may be adapted to bend grass in desired orientations and with a desired bending degree. The grass is thus oriented in different directions and with a varying degree of bending along the path of the mobile robot, whereby areas with different contrasts are created along the trajectories of the mobile robot. The bending direction may be adjusted by adjusting the direction of the tool relative to a trajectory and the bending degree is adjusted by adjusting the pressure, which is applied by means of the exemplary tool on the grass blades. In order to make the presentation of the figures more lucid, reference numerals for similar elements are only shown once.

The mobile robot 11 shown in Fig. 1 comprises a body or housing 113, wheels 116 and a navigation system 110. In the present case, the exchangeable tool comprises a colour marking device 13 that is attached to arm 124. The colour marking device 13 is connected to control electronics within the body 113 by means of a terminal box 122, shown in Fig. 1. The terminal box 122 facilitates exchange of different types of colour marking devices 13. Furthermore a height adjustment means and direction adjustment means 120 is provided on arm 124. Means 120 influences the height of tool 13 over the large surface to be treated. The robot 11 may thus create coloured marked lines on a large surface by navigating over the surface along trajectories. Along the trajectories the robot treats the large surface, wherein the treatment is adjustable in terms of e.g. colour hue etc. Thus a visual presentation is created on a large surface.

The mobile robot 11 shown in Fig. 1 is adapted for drawing a contour line by depositing colour or a coloured powder onto a large surface. The width of the contour line may be varied depending on the total size of the visual presentation to be created. The robot comprises a body or housing 113, wheels 116 and a navigation system 110. An air-pumping device 111, e.g. a compressor, supplies pressure through a pressure line 112 to a colour container 114, containing a dye comprising surface treatment medium, such as paint or ink. From container 114 the paint is conveyed under pressure through a pipe 115 to a nozzle 118. Nozzle 118 is directed downward towards the surface on which the mobile robot 11 moves and on which the visual presentation is to be created. The nozzle 118 is of the spray paint nozzle type and has a defined ejection form 117, e.g. conical as shown in Fig. 1 or other forms known to the skilled person, such as rectangular, a straight line, a cross, a star etc. Nozzle 118 is arranged on a carrier arm 124, wherein the position on arm 124, the height of arm 124 and the distance to robot body 113 are adjustable. The nozzle 118 is controlled by means of a control unit 123 connected to nozzle 118 by means of a control line 121.

At least one nozzle as illustrated is arranged on said nozzle carrier 125. The nozzle carrier is arranged on a side of the free-roaming marking device 11. The nozzle carrier is e.g. positioned on the side or in the centre 119, as shown in Fig.1 and Fig.5C of the free-roaming marking device 12 or behind/in front of the free-roaming marking device. While the robot according to the invention travels along the trajectories paint is deposited onto the surface, thus marking contour lines of a visual presentation e.g. representing contour lines of a logotype. The number of nozzles, which is used for marking, is variable.

### Conversion of graphics to mobile robot trajectories and contour lines

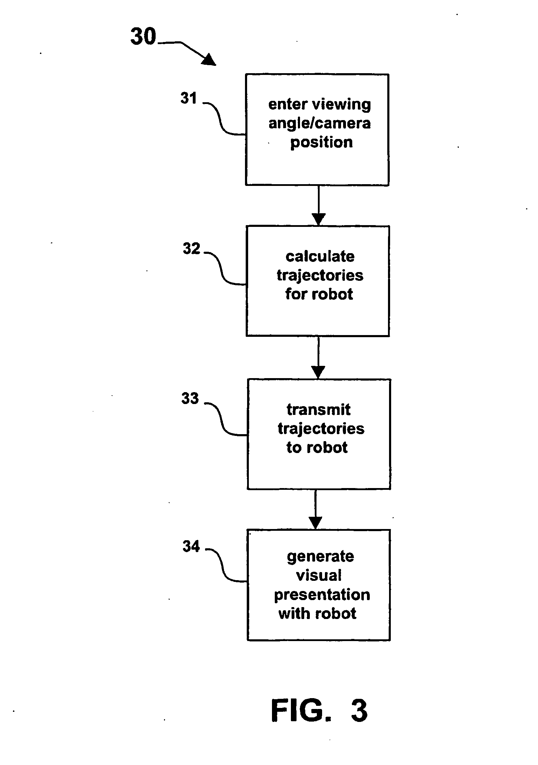

A more detailed description of a method 30 for transferring vector graphics to large surfaces is given below, with reference to Fig. 3.

A vector based drawing software such as AutoCad^{®} or Adobe Illustrator^{®} creates a drawing. The drawing is exclusively build up of vectorised graphics in the form of splines or straight lines. The input to the mobile robot system is standardised vector graphics formats such as DXF, DWG or SVG format.

Once a vector drawing is available, a set of trajectories is calculated in step 32 for the robot to allow coverage of a specified area. Optionally, a camera position i.e. viewing angle and distance may be entered in step 31. With this information, the visual presentation may be modified in its visual properties, such as contrast, size, shape, perspective or position. Thus the visual presentation is adapted and optimised for a certain camera position better perception of the visual presentation is ensured. Alternatively the position of the visual presentation is adapted manually, e.g. on a portable computing device 21 (Fig. 2) on the location where the visual presentation is to be generated. Fig. 6 illustrates this method step. A visual presentation 63 is to be created on a large surface 62. A camera 67 is arranged to capture an event and also the visual presentation 63 on surface 62. The camera 67 has a certain position, i.e. a distance and viewing angle, in relation to the visual presentation. In order to adjust the visual presentation 63, the size, shape and position of the visual presentation 63 may be optimised, as indicated by arrows 66 (position), arrows 64a, 64b and 65a, 65b (size/shape) and arrow 68 (rotation) regarding the contour of the visual presentation 63. This is illustrated by the difference between A, B and C as shown in Fig. 6, wherein the position of the camera 67 is different and the shape of the logotype 63 is adapted accordingly.

The robot moves then to a specified position and traverses the trajectories subsequently. An on-board surface treatment device, such as colour marking device 13, on the robot allows treatment of the surface as the robot passes along trajectories. When travelling along the trajectories, the robot treats the surface along the contour lines of the visual presentation. The surface is treated continuously or intermittently when travelling along the trajectories in order to create the contour lines of the visual presentation. When a new start point is reached the marking device is turned on and a new path is covered. For instance the "C" of "Carlsberg"^{®} in the Figures is a separate trajectory path from the trajectory paths 55 for creating the inner or outer contour line 59A, 59B of the "ar" section of the same "Carlsberg"^{®} visual presentation.

The trajectory tracking is achieved with a high accuracy perpendicular to the path with a navigation system, for instance based on GPS and/or laser scanning.

For localisation, the robot is equipped with a navigation subsystem, preferably a laser scanner or a GPS unit. A set of artificial markers 61, also called beacons is placed in the work area co-operating with the laser scanner in order to navigate the mobile robot with high accuracy.

Alternatively, or in combination to the laser scanning system multiple other systems may be used, such as GPS or orientation sensors, which provide headings and tilt/skew information indoors or outdoors for the mobile robot. Furthermore a compass or a gyro improves track accuracy.

### Creation of the visual presentation

A detailed description of how the visual presentation is generated with the robot, according to steps 33 and 34 of the method, is given below.

An original, or master, for a visual presentation is created in a computer 20 and transferred, e.g. via a link 23 or a computer readable medium, to a portable computing device 21 on location where the visual presentation is to be created.

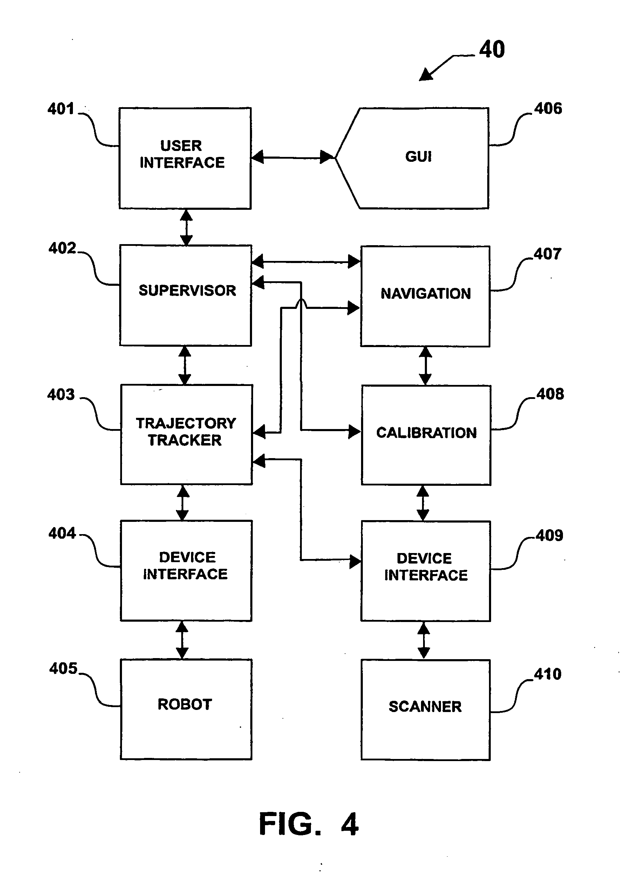

At the beginning of the job, markers (beacons, 61 see Fig 6) are placed in the work environment and a calibration task is performed to determine the relative position of the markers with respect to the robot, this corresponds to the calibration unit 408 in Fig. 4. The robot is positioned at the starting point for the task (position 0,0). The calibration is performed in a dialogue with the user through the wireless link 24 (Fig. 2), wherein the calibration comprises e.g. the following steps:
1. Entry of the number of landmarks (beacons 61).
   The more markers used, the more precise the localisation, positioning and navigation of the mobile robot will get for creating the visual presentation. However, localisation will also work with a single landmark.
2. Position of the landmarks 61.
3. Verification of the positions of landmarks 61 by the laser system.
4. Generation of an estimate of the expected accuracy for the localisation system.
5. Accept / reject (start over) by the operator.

If it is regarded that the expected accuracy computed in step 4 is sufficient, the calibration is accepted. In the other case, the operator rejects the calibration and the calibration procedure is started over, e.g. with an increased number of beacons for improved localisation accuracy.

The operator interface of the embodiment is in the form of a Java script to be executed on a portable computing device such as a laptop or a handheld device (such as a Compaq Ipaq^{®}) equipped with a wireless LAN interface.

Once the calibration has been achieved the operator initiates the task, which subsequently is performed autonomously by the free-roaming marking device, i.e. the mobile robot. The trajectories are transmitted to the robot in step 33 and the visual presentation is generated in step 34.

Now turning to Fig. 4, the robot platform is equipped with a computer and a Laser Scanner Interface. The computer runs preferably on a Linux operating system. In addition the robot 405 is equipped with a Laser scanner 410. The robot is also equipped with a wireless interface, as described above.

For the system a software package comprises the following code segments according to an embodiment of the invention:

### 1. Device interface (robot interface 404 and laser scanner interface 409)

The device interface is responsible for access to control functions on the robot platform. This is achieved through a Hardware Abstraction Layer that ensures that it is easy to transfer the software from one robot to another, in order to be able to change the basic robot platform. The functionality provided is in the form of basic motion function, i.e. position and velocity control, and detection of collisions, preferably by bumper activation.

### 2. Localisation and Tracking modules

The navigation module 407 uses a feature-based method for detection of beacons. The position of beacons is preferably tracked by using an Extended Kalman filter, wherein the position of the beacons and the robot positions are maintained over time. The Kalman filter utilises odometric feedback, such as wheel or motor encoders, as well as detected features from the laser scanner 110 to determine the position of the mobile robot. Preferably three beacons are at any time in the view range of the laser scanner device to ensure robust localisation of the mobile robot. This is ensured during calibration. The detection of beacon positions is preferably achieved using a generalised Hough transform. By using the position estimate, the tracking function plans the mobile robots' motion commands to achieve a smooth traversal of a spline trajectory. This involves use of a standard state based controller that tracks position and velocity to ensure a smooth traversal and involves one step prediction to generate motion commands to the robot. The tracker traverses single trajectories 55.

### 3. Path Planning & Supervisor module 402

The path planner is responsible for selection of the order in which trajectories 55 are to be traversed. Once a list of trajectories 55 has been generated the individual segments are forwarded to the tracker for implementation. Upon completion of a segment 55, the tracker requests a new segment from the planner. Upon completion of all trajectories 55 the supervisor 402 is notified and the tracker 403 and planner are terminated. In a practical implementation, the individual segments correspond to layers of a data structure, namely the above mentioned working operations data file. The layers are run subsequently and comprise information on trajectories, contour lines, and speed of the free-roaming marking device, marking on/off etc.

The supervisor module 402 is responsible for monitoring the progress of the mission (generating a visual presentation on a large surface), handling of obstacles, scheduling of complete missions and handling of minor error conditions. For major errors a diagnostic message is forwarded to the end-user for taking suitable action.

### 4. User interface 401

The user interface 401 is responsible for communication with the user, preferably by means of a graphical user interface (GUI) 406, on a remote computer, preferably portable computing device, such as a laptop or handheld device. The communication between the GUI and the user interface is established through a protocol, preferably XML based, to ensure error detection and handling of minor communication problems such as temporary loss of communication in the link between the GUI and the user interface. The complete architecture for the system is outlined in Figure 4.

A menu-based system is used for set-up and interaction with the system. The functions performed by the menu-based system are e.g.:
- Initialisation,
- Calibration set-up,
- Task initiation,
- Download of a vector image to the robot,
- Monitoring of task progress,
- Temporary interruption of the task, and
- Termination of an on-going task.

The described software according to the embodiment is stored on a computer-readable medium, e.g. the memory of the above described mobile robot or of a portable computing device, for processing by a computer, comprised e.g. on the above described mobile robot or portable computing device.

A proof creation of at least a part of a visual presentation may be performed prior to the actual creation. Thus the system can be fine adjusted in advance to e.g. a certain characteristics of a surface on which a visual presentation shall be created.

When the exchangeable tool are nozzles for depositing paint/colour, these are preferably of the commercially available automatic spray gun type. The form of the deposited paint on the surface depends on the input pressure, the nozzle form and spraying angle, the distance to nozzle to surface, the paint viscosity, the desired thickness of the paint or the amount of paint to be deposited to have colour saturation over the surface colour etc. The nozzles are adapted to the specific visual presentation to be created and the above mentioned working parameters are configured accordingly. According to an embodiment of the invention, as shown in the upper part of Fig. 1, the surface treatment means 13 is arranged outside a base between said propulsion means 116, in such a manner that the propulsion means 116 do not cross already treated surface areas when moving e.g. parallel with said already treated surface areas. This is important in order to reduce production times, because the mobile robot is in certain cases not allowed to move with any of its wheels into a short time ago treated surface, especially when the surface treatment is performed by depositing colour material, such as paint, which has to dry. Otherwise the wheels would take up colour material on the wheels and spread this material onto the surface on its continued track.

Applications and use of the above described creation of visual presentations on large surfaces according to the invention are various and include exemplary fields such as creation of images, drawings such as company logotypes, emblems, artwork etc. A further application field comprise common markings on arbitrary surface material as for instance textile fabrics, which may be moved to another location when the visual presentation is created, e.g. hung up on a wall of a building. The marking may as well be large markings such as on runways on airports etc. The system is portable and usable in both an outdoor and indoor environment. These visual presentations may e.g. be a company logotype on surfaces such as a formula 1 track or a road section of the Tour de France, or surfaces adapted for sports performed on grass covered surfaces comprising soccer, golf, baseball, cricket, tennis, American football, rugby etc, which is viewed by a large number of viewers during a TV broadcast. These surfaces may be indoors or outdoors. The visual presentation may be commercial messages such as company names, trade marks, brand names, product names or logotypes, or other information such as the names or emblems of currently competing teams, the name of the stadium or the location, the name or emblem of the sports association, etc.

The events also include other events such as TV-commercials or inauguration ceremonies of e.g. the Olympic Games. Furthermore the large surface may be adjacent to the event surface itself. E.g. on a parking lot adjacent to a formula 1 circuit or motor sports tracks in general, athletic or field sports tracks, equestrian sports arenas, horse-racing tracks, etc., i.e. the large surface is on the side of an event surface. In this way the visual presentation will still be broadcast, although it is not directly present on the event field such as a football field, a sand-covered horse-racing track etc.

The marking device and method of the invention furthermore allow marking of arbitrary large surfaces such as airport runways with large markings, such as the example illustrated in Fig. 7D, or e.g. roads with road signs and other road markings, such as the examples illustrated in Figs. 7E and 7F. In this case the visual presentation created is produced in a short time and with very high precision. These markings are not necessarily TV broadcast, but creating such markings with very high precision, flexibility and short production times has up to now not been possible. This is a major advantage of the invention.

The present invention has been described above with reference to specific embodiments. However, other embodiments than the preferred above are equally possible within the scope of the appended claims, such as different mobile robots having e.g. a different number of wheels or other propulsion systems than those described above or other navigation systems performing the above methods by hardware or software, etc.

The present invention has been described with reference to different embodiments. However, the scope of the invention should not be limited to the above-described embodiments, but is only defined by the appended patent claims.

It should be emphasised that the term "comprises/ comprising" when used in this specification is taken to specify the presence of stated features, integers, steps, or components, but does not preclude the presence or addition of one or more features, integers, steps, components or groups thereof. Furthermore, the terms "a" and "an" when used in this specification do not exclude a plurality and a single processor or other units may fulfil the functions of several of the units or circuits recited in the claims.

## Claims

1. A method of creating a visual presentation (51, 63) on a substantially plane large surface (62) by means of at least one marking device, **characterised by**
providing said marking device as a free-roaming marking device (11, 12, 22, 53) being capable of moving holonomically on said surface (62),
passing along at least one trajectory (55) on said surface (62) with said free-roaming marking device (11, 12, 22, 53) moving holonomically along at least one, possibly curved, contour line (54) of said visual presentation (51, 63) without interruption on said surface (62), and
treating said surface (62) continuously along said at least one contour line (54) of said visual presentation (51, 63) by means of said free-roaming marking device (11, 12, 22, 53) when passing along said at least one trajectory (55).

2. The method according to claim 1, wherein said moving holonomically comprises moving with said free-roaming marking device (11, 12, 22, 53) in an arbitrary direction on said surface (62), while simultaneously controlling rotational speed of said free-roaming marking device (11, 12, 22, 53).

3. The method according to claim 1 or 2, wherein said treating comprises marking said surface (62) with an exchangeable tool, wherein said tool is adapted to deposit paint onto the surface (62) and along said at least one contour line (54).

4. The method according to claim 1 or 2, wherein said treating comprises marking said surface (62) with an exchangeable tool, wherein said tool is adapted to perform at least one task chosen from bending and/or orienting and/or cutting grass blades in said surface (62).

5. The method according to any of the preceding claims, further comprising subsequently treating at least one interior or exterior area delineated by said at least one contour line (54) of said visual presentation (51, 63) on said surface (62).

6. The method according to claim 5, further comprising treating said at least one interior or exterior area by means of said free-roaming marking device (11, 12, 22, 53).

7. The method according to claim 5, further comprising manually treating said at least one interior or exterior area.

8. The method according to any of the preceding claims, comprising computing said at least one trajectory (55) from a source data representing said visual presentation (51, 63), wherein said source data is a computer data file representing said visual presentation (51, 63), and automatically transforming said computer file to instructions for said free-roaming marking device (11, 12, 22, 53) to pass along said at least one trajectory (55) for creating said visual presentation (51, 63).

9. The method according to claim 8, wherein said computer data file is a vector graphics file.

10. The method according to claim 8, wherein said instructions comprise working operations of the free-roaming marking device (11, 12, 22, 53) comprising working order, direction, speed, trajectory track and start/stop positions of the free-roaming marking device (11, 12, 22, 53), colour and marking on/off.

11. The method according to any of the preceding claims, comprising creating said visual presentation (51, 63) according to scale, and adapting said visual presentation (51, 63) to a viewing angle and/or viewing distance with respect to a position of an image capturing means in relation to said visual presentation (51, 63) on said surface (62).

12. The method according to claim 11, comprising adapting a perspective of said visual presentation (51, 63) to said viewing angle and distance, comprising adapting the visual presentation (51, 63) with regard to size, shape or contrast.

13. The method according to claim 11 or 12, wherein said image capturing device is a TV-camera.

14. The method according to any of the preceding claims, comprising treating said surface (62) for creating said visual presentation as an all-over visual presentation.

15. The method according to any of the preceding claims, wherein said visual presentation (51, 63) is selected from the group comprising: drawings or images comprising logotypes or artwork.

16. The method according to any of the preceding claims, comprising determining a position of said free-roaming marking device (11, 12, 22, 53) by means of a navigation system (110).

17. The method according to claim 16, wherein said navigation system (110) is a laser scanner and/or a GPS unit.

18. The method according to any of the preceding claims, wherein said treating comprises marking said contour lines (54) by depositing paint on said surface (62) and/or bending of grass along said contour lines (54).

19. The method according to any of the preceding claims, wherein a material of said surface (62) being selected from the group comprising: asphalt, concrete, cement, stone, natural stone, a textile fabric, a synthetic material, artificial surface material, rubber, metal, glass blocks and grass.

20. The method according to any of the preceding claims, wherein said surface being selected from the group comprising: an airport runway, a road surface, a roof surface, an athletic field surface, sports fields, outdoor carpets, synthetic surfaces, artificial surfaces, container surfaces, wherein these surfaces are outdoor and/or indoor surfaces.

21. The method according to any of the preceding claims wherein said surface (62) is pre-treated with a foundation for formatting said surface.

22. The method according to claim 21, comprising creating said visual presentation on said foundation material, removing said foundation material from said surface for transporting to a target location, and attaching said foundation with said visual presentation thereon to a large surface at said target location.

23. The method according to any previous claim, further comprising said free-roaming marking device (11, 12, 22, 53) wirelessly communicating with a portable computing device (21) for programming and controlling said free-roaming marking device (11, 12, 22, 53) on location where the visual presentation is to be created.

24. The method according to claim 23, further comprising creating a master (50) for said visual presentation (51, 63) by means of a remote computer, and transmitting said master to said portable computing device (21) for further processing.

25. The method according to claims 22 to 24, comprising automatically creating said at least one contour line (54) of said visual presentation (51, 63) on said surface (62) with said free-roaming marking device (11, 12, 22, 53).

26. A system for performing the method of claim 1 by creating a visual presentation (51, 63) on a substantially plane large surface (62), said system comprising
a free-roaming marking device (11, 12, 22, 53) adapted to create said visual presentation (51, 63) by treating said surface (62), wherein said free-roaming marking device (11, 12, 22, 53) in use is adapted to holonomically pass along trajectories (55) on said surface, said free-roaming device comprising treatment means for treating said surface (62) without interruption along contour lines (54) of said visual presentation (51, 63) when passing along said trajectories (55), and calculation means for automatically calculating said trajectories from a source data representing said visual presentation.

27. The system according to claim 26, further comprising a portable computing device (21) for wireless communication with the free-roaming marking device (11, 12, 22, 53) and for programming and controlling the free-roaming marking (11, 12, 22, 53) device on location where the visual presentation (51, 63) is to be created.

28. The system according to claim 26, further comprising a remote computer for creating a master for said visual presentation (51, 63) and wherein said master is transmitted to said portable computing device for further processing.

29. The system according to claims 26 to 28, wherein said free-roaming marking device (11, 12, 22, 53) is devised to automatically create at least one contour line of said visual presentation (51, 63) on said large surface with said marking means.

30. The system according to claim 29, wherein said marking means is at least one paint depositing nozzle (118).

31. The system according to claim 30, wherein said at least one nozzle (118) is arranged on a nozzle carrier (125) on said free-roaming marking device (11, 12, 22, 53).

32. The system according to claim 31, wherein said nozzle carrier (125) is centrally arranged in relation to a rotational centre (119) of said free-roaming marking device (11, 12, 22, 53) or arranged on a side of said free-roaming marking device (11, 12, 22, 53).

33. The system according to claim 31, wherein said nozzle carrier is arranged in front of or behind said free-roaming marking device (11, 12, 22, 53).

34. The system according to claim 26, wherein said free-roaming marking device (11, 12, 22, 53) comprises a surface treatment tool having an adjustable treatment direction and an adjustable pressure onto said surface.

35. The system according to any of claims 26 to 34,
wherein said free-roaming marking device (11, 12, 22, 53) comprises a navigation system (110).

36. The system according to claim 35, wherein said navigation system (110) is a laser scanner and/or a GPS unit.

37. A computer-readable medium having embodied thereon a computer program for processing by a computer for generating a visual presentation (51, 63) on a large surface according to the method of claim 1, said computer program comprising a plurality of code segments,
**characterised by**
a first code segment for computing at least one trajectory along which a free-roaming marking device (11, 12, 22, 53) passes holonomically for creating said visual presentation (51, 63),
wherein said trajectories are automatically computed from a source data representing said visual presentation (51, 63), and
a second code segment for instructing said free-roaming marking device to pass without interruption along trajectories on said surface in such a way that at least one contour line of said visual presentation (51, 63) is continuously created on said large surface by treating said surface along contour lines of said visual presentation (51, 63) with said free-roaming marking device (11, 12, 22, 53) when passing along said trajectories.

38. Use of a mobile robot as a free-roaming marking device for performing the method according to claim 1, by generating a visual presentation (51, 63) on a substantially plane large surface, wherein said mobile robot is instructed to pass holonomically along trajectories, and said visual presentation (51, 63) is created on said surface as a sum of said trajectories,
wherein at least one, possibly curved, contour line of said visual presentation (51, 63) is created on said surface by continuously treating said surface along said at least one contour line of said visual presentation (51, 63) with said free-roaming marking device when passing along said trajectories.

39. Use of a mobile robot according to claim 39,
wherein said trajectories are automatically calculated from a computer data file comprising a graphics file storing said visual information of said visual presentation (51, 63).

## Patentansprüche

1. Verfahren zur Erstellung einer visuellen Präsentation (51, 63) auf einer im Wesentlichen ebenen, großen Oberfläche (62) mittels zumindest einer Markierungsvorrichtung, **dadurch gekennzeichnet, dass**
diese Markierungsvorrichtung als eine frei bewegliche Markierungsvorrichtung (11, 12, 22, 53) bereitgestellt wird, die in der Lage ist, sich holonomisch auf der genannten Oberfläche (62) zu bewegen,
wobei sie sich entlang zumindest einer Bahnkurve (55) auf dieser Oberfläche (62) bewegt, wobei die frei bewegliche Markierungsvorrichtung (11, 12, 22, 53) sich holonomisch ohne Unterbrechung auf der Oberfläche (62) entlang zumindest einer möglicherweise gekrümmten Konturlinie (54) der visuellen Präsentation (51, 63) bewegt und
die Behandlung der Oberfläche (62) - kontinuierlich entlang der zumindest einen Konturlinie (54) der visuellen Präsentation (51, 63) - mittels der frei beweglichen Markierungsvorrichtung (11, 12, 22, 53), wenn die Markierungsvorrichtung sich entlang der zumindest einen Bahnkurve (55) bewegt.

2. Verfahren nach Anspruch 1, wobei die holonomische Bewegung umfasst, dass die frei bewegliche Markierungsvorrichtung (11, 12, 22, 53) in einer frei wählbaren Richtung auf der Oberfläche (62) bewegt wird, während gleichzeitig die Rotationsgeschwindigkeit der frei beweglichen Markierungsvorrichtung (11, 12, 22, 53) gesteuert wird.

3. Verfahren nach Anspruch 1 oder 2, wobei die Behandlung die Markierung der Oberfläche (62) mittels eines auswechselbaren Werkzeugs umfasst, und wobei dieses Werkzeug dafür eingerichtet ist, Farbe auf der Oberfläche (62) und entlang der zumindest einen Konturlinie (54) abzulagern.

4. Verfahren nach Anspruch 1 oder 2, wobei die Behandlung die Markierung der Oberfläche (62) mittels eines auswechselbaren Werkzeugs umfasst, und wobei dieses Werkzeug dafür eingerichtet ist, zumindest eine der folgenden Aufgaben auszuführen: Beugen und/oder Ausrichten und/oder Schneiden von Grashalmen auf der genannten Oberfläche (62).

5. Verfahren nach einem der vorangehenden Patentansprüche, ferner die nachfolgende Behandlung von zumindest einem inneren oder äußeren Bereich umfassend, der durch die zumindest eine Konturlinie (54) der visuellen Darstellung (51, 63) auf der genannten Oberfläche (62) abgegrenzt wird.

6. Verfahren nach Anspruch 5, ferner die Behandlung des zumindest einen inneren oder äußeren Bereichs mittels der frei beweglichen Markierungsvorrichtung (11, 12, 22, 53) umfassend.

7. Verfahren nach Anspruch 5, ferner die manuelle Behandlung des zumindest einen inneren oder äußeren Bereichs umfassend.

8. Verfahren nach einem der vorangehenden Patentansprüche, die Berechnung der zumindest einen Bahnkurve (55) aus Quelldaten umfassend, die die genannte visuelle Darstellung (51, 63) repräsentieren, wobei die Quelldaten eine Computerdatei sind, die die visuelle Darstellung (51, 63) repräsentiert, und wobei diese Computerdatei automatisch in Anweisungen für die frei bewegliche Markierungsvorrichtung (11, 12, 22, 53) umgewandelt wird, damit diese sich entlang der zumindest einen Bahnkurve (55) bewegt, um die visuelle Darstellung (51, 63) zu erzeugen.

9. Verfahren nach Anspruch 8, wobei die Computerdatei eine Vektorgrafikdatei ist.

10. Verfahren nach Anspruch 8, wobei die Anweisungen Arbeitsvorgänge der frei beweglichen Markierungsvorrichtung (11, 12, 22, 53) umfassen und diese umfassen: Arbeitsreihenfolge, Richtung, Geschwindigkeit, Bahnkurvenstrecke und Anfangs-/Endpositionen der frei beweglichen Markierungsvorrichtung (11, 12, 22, 53), Farbe und Markierung ein/aus.

11. Verfahren nach einem der vorangehenden Patentansprüche, das die maßstäbliche Erstellung der visuellen Darstellung (51, 63) und das Anpassen der visuellen Darstellung (51, 63) an einen Blickwinkel und/oder Betrachtungsabstand in Bezug auf eine Position einer Bilderfassungseinrichtung im Verhältnis zu der visuellen Darstellung (51, 63) auf der Oberfläche (62) umfasst.

12. Verfahren nach Anspruch 11, die Anpassung einer Perspektive der visuellen Darstellung (51, 63) an den Blickwinkel und den Betrachtungsabstand umfassend, was die Anpassung der visuellen Darstellung (51, 63) in Bezug auf Größe, Form oder Kontrast umfasst.

13. Verfahren nach Anspruch 11 oder 12, wobei die Bilderfassungsvorrichtung eine Fernsehkamera ist.

14. Verfahren nach einem der vorangehenden Patentansprüche, die Behandlung der Oberfläche (62) umfassend, um die genannte visuelle Darstellung als eine "ausgefüllte" visuelle Darstellung zu erstellen.

15. Verfahren nach einem der vorangehenden Patentansprüche, wobei die visuelle Darstellung (51, 63) aus folgender Gruppe ausgewählt wird: Zeichnungen oder Bilder, die Firmenschriftzüge oder Grafik umfassen.

16. Verfahren nach einem der vorangehenden Patentansprüche, die Feststellung einer Position der frei beweglichen Markierungsvorrichtung (11, 12, 22, 53) mittels eines Navigationssystems (110) umfassend.

17. Verfahren nach Anspruch 16, wobei das Navigationssystem (110) ein Laserscanner und/oder eine GPS-Einheit ist.

18. Verfahren nach einem der vorangehenden Patentansprüche, wobei die genannte Behandlung die Markierung der Konturlinien (54) durch die Ablagerung von Farbe auf der Oberfläche (62) und/oder das Biegen von Grashalmen entlang den Konturlinien (54) umfasst.

19. Verfahren nach einem der vorangehenden Patentansprüche, wobei ein Material der genannten Oberfläche (62) aus folgender Gruppe ausgewählt wird: Asphalt, Beton, Zement, Stein, Naturstein, ein Textilgewebe, ein Synthetikmaterial, Gummi, Metall, Glasbausteine und Gras.

20. Verfahren nach einem der vorangehenden Patentansprüche, wobei die Oberfläche aus folgender Gruppe ausgewählt wird: eine Flughafen-Rollbahn, eine Straßenoberfläche, eine Dachoberfläche, eine Sportplatzoberfläche, Sportplätze, Außenraum-Teppiche, Synthetikoberflächen, künstliche Oberflächen, Behälteroberflächen, wobei es sich bei diesen Oberflächen um außen oder innen liegende Oberflächen handeln kann.

21. Verfahren nach einem der vorangehenden Patentansprüche wobei die Oberfläche (62) mit einem Untergrundmaterial vorbehandelt wird, um die Oberfläche zu gestalten.

22. Verfahren nach Anspruch 21, das die Erstellung der visuellen Darstellung auf dem Untergrundmaterial, das Entfernen des Untergrundmaterials von der Oberfläche zwecks Transport zu einem Zielort und das Befestigen des Untergrundmaterials mit der visuellen Darstellung darauf auf einer großen Oberfläche an dem genannten Zielort umfasst.

23. Verfahren nach einem der vorhergehenden Ansprüche, ferner die drahtlose Kommunikation der frei beweglichen Markierungsvorrichtung (11, 12, 22, 53) mit einer tragbaren Rechenvorrichtung (21) zur Programmierung und Steuerung der frei beweglichen Markierungsvorrichtung (11, 12, 22, 53) an dem Standort, wo die visuelle Darstellung erstellt werden soll, umfassend.

24. Verfahren nach Anspruch 23, ferner die Erstellung eines Masters (50) für die visuelle Darstellung (51, 63) mittels eines entfernten Computers und Senden des Masters an die tragbare Rechenvorrichtung (21) zur weiteren Verarbeitung umfassend.

25. Verfahren nach den Patentansprüchen 22 bis 24, die automatische Erstellung der zumindest einen Konturlinie (54) der visuellen Darstellung (51, 63) (62) durch die frei bewegliche Markierungsvorrichtung (11, 12, 22, 53) auf der Oberfläche umfassend.

26. System zur Durchführung des Verfahrens nach Anspruch 1, durch Erstellen einer visuellen Präsentation (51, 63) auf einer im Wesentlichen ebenen, großen Oberfläche (62), wobei das System umfasst:
eine frei bewegliche Markierungsvorrichtung (11, 12, 22, 53), die dafür eingerichtet ist, die visuelle Darstellung (51, 63) durch die Behandlung der Oberfläche (62) zu erstellen, wobei die frei bewegliche Markierungsvorrichtung (11, 12, 22, 53) beim Gebrauch dafür eingerichtet ist, sich holonomisch entlang von Kurvenbahnen (55) auf der genannten Oberfläche zu bewegen, und wobei die frei bewegliche Markierungsvorrichtung Behandlungsmittel zur unterbrechungsfreien Behandlung der Oberfläche (62) entlang Konturlinien (54) der visuellen Darstellung (51, 63) umfasst, wenn die Markierungsvorrichtung sich entlang der Kurvenbahnen (55) bewegt, und eine Berechnungsvorrichtung zur automatischen Berechnung der Bahnkurven aus Quelldaten, die die visuelle Darstellung repräsentieren.

27. System nach Anspruch 26, das ferner umfasst: eine tragbare Rechenvorrichtung (21) zur drahtlosen Kommunikation mit der frei beweglichen Markierungsvorrichtung (11, 12, 22, 53) und zur Programmierung und Steuerung der frei beweglichen Markierungsvorrichtung (11, 12, 22, 53) an dem Standort, wo die visuelle Darstellung (51, 63) erstellt werden soll.

28. System nach Anspruch 26, ferner einen entfernten Computer für die Erstellung eines Masters für die visuelle Darstellung (51, 63) umfassend, wobei der Master an die tragbare Rechenvorrichtung (21) zur weiteren Verarbeitung gesandt wird.

29. System nach den Ansprüchen 26 bis 28, wobei die frei bewegliche Markierungsvorrichtung (11, 12, 22, 53) dazu bestimmt ist, mit der Markierungseinrichtung zumindest eine Konturlinie der visuellen Darstellung (51, 63) auf der großen Oberfläche zu erstellen.

30. System nach Anspruch 29, wobei die Markierungseinrichtung zumindest eine Farbe abscheidende Düse (118) ist.

31. System nach Anspruch 30, wobei die zumindest eine Düse (118) auf einem Düsenträger (125) der frei beweglichen Markierungsvorrichtung (11, 12, 22, 53) angeordnet ist.

32. System nach Anspruch 31, wobei der Düsenträger (125) in Bezug auf ein Rotationszentrum (119) in der Mitte der frei beweglichen Markierungsvorrichtung (11, 12, 22, 53) angeordnet ist oder auf einer Seite der frei beweglichen Markierungsvorrichtung (11, 12, 22, 53) angeordnet ist.

33. System nach Anspruch 31, wobei der Düsenträger vor oder hinter der frei beweglichen Markierungsvorrichtung (11, 12, 22, 53) angeordnet ist.

34. System nach Anspruch 26, wobei die frei bewegliche Markierungsvorrichtung (11, 12, 22, 53) ein Oberflächenbehandlungswerkzeug mit einer einstellbaren Behandlungsrichtung und einem einstellbaren Druck auf die genannte Oberfläche umfasst.

35. System nach einem der Patentansprüche 26 bis 34,
wobei die frei bewegliche Markierungsvorrichtung (11, 12, 22, 53) ein Navigationssystem (110) umfasst.

36. Verfahren nach Anspruch 35, wobei das Navigationssystem (110) ein Laserscanner und/oder eine GPS-Einheit ist.

37. Ein computerlesbares Medium auf dem ein Computerprogramm für die Computerverarbeitung zur Erstellung einer visuellen Präsentation (51, 63) auf einer großen Oberfläche gemäß dem Verfahren nach Anspruch 1 verkörpert ist, wobei das Computerprogramm eine Vielzahl Codesegmente umfasst, **gekennzeichnet durch**
ein erstes Codesegment zur Berechnung zumindest einer Bahnkurve entlang derer sich eine frei bewegliche Markierungsvorrichtung (11, 12, 22, 53) holonomisch bewegt, um die visuelle Darstellung (51, 63) zu erzeugen,
wobei die Bahnkurven automatisch aus Quelldaten berechnet werden, die die visuelle Darstellung (51, 63) repräsentieren, und
ein zweites Codesegment, um die frei bewegliche Markierungsvorrichtung anzuweisen, sich unterbrechungsfrei derart entlang von Bahnkurven auf der Oberfläche zu bewegen, dass zumindest eine Konturlinie der visuellen Darstellung (51, 63) fortlaufend auf der großen Oberfläche durch Behandlung der Oberfläche entlang den Konturlinien der visuellen Darstellung (51, 63) die frei bewegliche Markierungsvorrichtung (11, 12, 22, 53), wenn diese sich entlang den Bahnkurven bewegt.

38. Verwendung eines mobilen Roboters als eine frei bewegliche Markierungsvorrichtung zur Durchführung des Verfahrens nach Anspruch 1, durch Erzeugung einer visuellen Darstellung (51, 63) auf einer im Wesentlichen ebenen, großen Oberfläche, wobei der mobile Roboter angewiesen ist, sich holonomisch entlang den Bahnkurven zu bewegen, und die visuelle Darstellung (51, 63) auf der Oberfläche als eine Summe der Bahnkurven erzeugt wird, wobei zumindest eine möglicherweise gekrümmte Konturlinie der visuellen Darstellung (51, 63) auf der Oberfläche durch fortlaufende Behandlung der Oberfläche entlang der zumindest einen Konturlinie der visuellen Darstellung (51, 63) durch die frei bewegliche Markierungsvorrichtung, wenn diese sich entlang den genannten Bahnkurven bewegt.

39. Verwendung eines mobilen Roboters nach Anspruch 39, wobei die Bahnkurven automatisch aus einer Computerdatei berechnet werden, die eine Grafikdatei umfasst, in der die visuellen Informationen der visuellen Darstellung (51, 63) gespeichert sind.

## Revendications

1. Procédé de création d'une présentation visuelle (51, 63) sur une grande surface sensiblement plane (62) au moyen d'au moins un dispositif de marquage, **caractérisé par**
la fourniture dudit dispositif de marquage en tant que dispositif de marquage se déplaçant de façon non aléatoire (11,12, 22, 53) qui est capable de se déplacer en mode holonome sur ladite surface (62),
le passage le long d'au moins une trajectoire (55) sur ladite surface (62), ledit dispositif de marquage se déplaçant de façon non aléatoire (11,12, 22, 53) se déplaçant en mode holonome le long d'au moins une, éventuellement courbée, ligne de contour (54) de ladite présentation visuelle (51, 63) sans interruption sur ladite surface (62), et
le traitement de ladite surface (62) en continu le long de ladite au moins une ligne de contour (54) de ladite présentation visuelle (51, 63) au moyen dudit dispositif de marquage se déplaçant de façon non aléatoire (11,12, 22, 53) lors d'un passage le long de ladite au moins une trajectoire (55).

2. Procédé selon la revendication 1, dans lequel ledit déplacement en mode holonome comprend le déplacement avec ledit dispositif de marquage se déplaçant de façon non aléatoire (11,12, 22, 53) dans une direction quelconque sur ladite surface (62), en même temps que la commande simultanée de la vitesse de rotation dudit dispositif de marquage se déplaçant de façon non aléatoire (11,12, 22, 53).

3. Procédé selon la revendication 1 ou 2, dans lequel ledit traitement comprend le marquage de ladite surface (62) avec un outil pouvant être changé, où ledit outil est conçu pour déposer de la peinture sur la surface (62) et le long de ladite au moins une ligne de contour (54).

4. Procédé selon la revendication 1 ou 2, dans lequel ledit traitement comprend le marquage de ladite surface (62) avec un outil pouvant être changé, où ledit outil est conçu pour réaliser au moins une tâche choisie parmi la flexion et/ou l'orientation et/ou le découpage de bandes d'herbe dans ladite surface (62).

5. Procédé selon l'une quelconque des revendications précédentes, comprenant en outre le traitement ultérieur d'au moins une zone intérieure ou extérieure délimitée par ladite au moins une ligne de contour (54) de ladite présentation visuelle (51, 63) sur ladite surface (62).

6. Procédé selon la revendication 5, comprenant en outre le traitement de ladite au moins une zone intérieure ou extérieure au moyen dudit dispositif de marquage se déplaçant de façon non aléatoire (11,12, 22, 53).

7. Procédé selon la revendication 5, comprenant en outre le traitement manuel de ladite au moins une zone intérieure ou extérieure.

8. Procédé selon l'une quelconque des revendications précédentes, comprenant le calcul de ladite au moins une trajectoire (55) à partir de données sources représentant ladite présentation visuelle (51, 63), où lesdites données sources sont un fichier de données informatique représentant ladite présentation visuelle (51, 63), et la transformation automatique dudit fichier informatique en instructions destinées audit dispositif de marquage se déplaçant de façon non aléatoire (11,12, 22, 53) pour passer le long de ladite au moins une trajectoire (55) afin de créer ladite présentation visuelle (51, 63).

9. Procédé selon la revendication 8, dans lequel ledit fichier de données informatique est un fichier image en mode vectoriel.

10. Procédé selon la revendication 8, dans lequel lesdites instructions comprennent des opérations de fonctionnement du dispositif de marquage se déplaçant de façon non aléatoire (11,12, 22, 53) comprenant un ordre, une direction, une vitesse, un suivi de trajectoire de fonctionnement et des positions de début/arrêt du dispositif de marquage se déplaçant de façon non aléatoire (11,12, 22, 53), une mise en marche/mise hors service de coloration et de marquage.

11. Procédé selon l'une quelconque des revendications précédentes, comprenant la création de ladite présentation visuelle (51, 63) selon l'échelle, et l'adaptation de ladite présentation visuelle (51, 63) par rapport à un angle d'observation et/ou à une distance d'observation relatifs à une position d'un moyen de capture d'images par rapport à ladite présentation visuelle (51, 63) sur ladite surface (62).

12. Procédé selon la revendication 11, comprenant l'adaptation d'une perspective de ladite présentation visuelle (51, 63) par rapport audit angle et à ladite distance d'observation, comprenant l'adaptation de la présentation visuelle (51, 63) aux dimensions, à la forme ou au contraste.

13. Procédé selon la revendication 11 ou 12, dans lequel ledit dispositif de capture d'images est une caméra de télévision.

14. Procédé selon l'une quelconque des revendications précédentes, comprenant le traitement de ladite surface (62) afin de créer ladite présentation visuelle sous forme d'une présentation visuelle d'ensemble.

15. Procédé selon l'une quelconque des revendications précédentes, dans lequel ladite présentation visuelle (51, 63) est sélectionnée parmi le groupe comprenant : des dessins ou des images y compris des types de logo ou une illustration.

16. Procédé selon l'une quelconque des revendications précédentes, comprenant la détermination d'une position dudit dispositif de marquage se déplaçant de façon non aléatoire (11,12, 22, 53) au moyen d'un système de navigation (110).

17. Procédé selon la revendication 16, dans lequel ledit système de navigation (110) est un dispositif de balayage à laser et/ou une unité GPS.

18. Procédé selon l'une quelconque des revendications précédentes, dans lequel ledit traitement comprend le marquage desdites lignes de contour (54) par le dépôt de peinture sur ladite surface (62) et/ou la flexion d'herbe le long desdites lignes de contour (54).

19. Procédé selon l'une quelconque des revendications précédentes, dans lequel un matériau de ladite surface (62) est sélectionné parmi le groupe comprenant : de l'asphalte, du béton, du ciment, de la pierre, de la pierre naturelle, une étoffe textile, un matériau synthétique, un matériau à surface artificielle, du caoutchouc, du métal, des blocs de verre et de l'herbe.

20. Procédé selon l'une quelconque des revendications précédentes, dans lequel ladite surface est sélectionnée à partir du groupe comprenant : une piste d'aéroport, une surface de route, une surface de toit, une surface de stade d'athlétisme, des terrains de sport, des revêtements extérieurs, des surfaces synthétiques, des surfaces artificielles, des surfaces de récipients, où ces surfaces sont des surfaces extérieures et/ou intérieures.

21. Procédé selon l'une quelconque des revendications précédentes, dans lequel ladite surface (62) reçoit un traitement préalable par le biais d'une fondation pour formater ladite surface.

22. Procédé selon la revendication 21, comprenant la création de ladite présentation visuelle sur ledit matériau de fondation, le retrait dudit matériau de fondation de ladite surface pour un transport à un endroit cible, et la liaison de ladite fondation ayant ladite présentation visuelle sur celle-ci à une grande surface audit endroit cible.

23. Procédé selon l'une quelconque des revendications précédentes, comprenant en outre la communication sans fil dudit dispositif de marquage se déplaçant de façon non aléatoire (11,12, 22, 53) avec un dispositif informatique portatif (21) destiné à programmer et à commander ledit dispositif de marquage se déplaçant de façon non aléatoire (11,12, 22, 53) à l'endroit où la présentation visuelle doit être créée.

24. Procédé selon la revendication 23, comprenant en outre la création d'une matrice (50) pour ladite présentation visuelle (51, 63) au moyen d'un ordinateur distant, et la transmission de ladite matrice audit dispositif informatique portatif (21) pour un traitement ultérieur.

25. Procédé selon les revendications 22 à 24, comprenant la création automatique de ladite au moins une ligne de contour (54) de ladite présentation visuelle (51, 63) sur ladite surface (62) ayant le dispositif de marquage se déplaçant de façon non aléatoire (11,12, 22, 53).

26. Système destiné à exécuter le procédé de la revendication 1 par la création d'une présentation visuelle (51, 63) sur une grande surface sensiblement plane (62), ledit système comprenant
un dispositif de marquage se déplaçant de façon non aléatoire (11,12, 22, 53) conçu pour créer ladite présentation visuelle (51, 63) par le traitement de ladite surface (62), où ledit dispositif de marquage se déplaçant de façon non aléatoire (11,12, 22, 53) lors de son utilisation est conçu pour passer en mode holonome le long de trajectoires (55) sur ladite surface, ledit dispositif se déplaçant de façon non aléatoire comprenant un moyen de traitement destiné à traiter ladite surface (62) sans interruption le long des lignes de contour (54) de ladite présentation visuelle (51, 63) lors d'un passage le long desdites trajectoires (55) et un moyen informatique destiné à calculer automatiquement lesdites trajectoires à partir de données sources représentant ladite présentation visuelle.

27. Système selon la revendication 26, comprenant en outre un dispositif informatique portatif (21) destiné à communiquer sans fil avec le dispositif de marquage se déplaçant de façon non aléatoire (11,12, 22, 53) et destiné à programmer et commander le dispositif de marquage se déplaçant de façon non aléatoire (11,12, 22, 53) à un endroit où la présentation visuelle (51, 63) doit être créée.

28. Système selon la revendication 26, comprenant en outre un ordinateur distant destiné à créer une matrice pour ladite présentation visuelle (51, 63) et dans lequel ladite matrice est transmise au dispositif informatique portatif pour un traitement ultérieur.

29. Système selon les revendications 26 à 28, dans lequel ledit dispositif de marquage se déplaçant de façon non aléatoire (11, 12, 22, 53) est conçu pour créer automatiquement au moins une ligne de contour de ladite présentation visuelle (51, 63)sur ladite grande surface à l'aide dudit moyen de marquage.

30. Système selon la revendication 29, dans lequel ledit moyen de marquage est au moins une buse de dépôt de peinture (118).

31. Système selon la revendication 30, dans lequel ladite au moins une buse (118) est agencée sur un support de buse (125) sur ledit dispositif de marquage se déplaçant de façon non aléatoire (11,12, 22, 53).

32. Système selon la revendication 31, dans lequel ledit support de buse (118) est agencé au centre par rapport à un centre de rotation (119) dudit dispositif de marquage se déplaçant de façon non aléatoire (11,12, 22, 53) ou agencé sur un côté du dispositif de marquage se déplaçant de façon non aléatoire (11, 12, 22, 53).

33. Système selon la revendication 31, dans lequel ledit support de buse est agencé devant ledit dispositif de marquage se déplaçant de façon non aléatoire (11,12, 22, 53) ou derrière celui-ci.

34. Système selon la revendication 26, dans lequel ledit dispositif de marquage se déplaçant de façon non aléatoire (11,12, 22, 53) comprend un outil de traitement de surface présentant une direction de traitement réglable et une pression réglable sur ladite surface.

35. Système selon l'une quelconque des revendications 26 à 34, dans lequel ledit dispositif de marquage se déplaçant de façon non aléatoire (11,12, 22, 53) comprend un système de navigation (110).

36. Système selon la revendication 35, dans lequel ledit système de navigation (110) est un dispositif de balayage à laser et/ou une unité GPS.

37. Support pouvant être lu par ordinateur comportant, intégré à celui-ci, un programme informatique destiné à être traité par un ordinateur pour générer une présentation visuelle (51, 63) sur une grande surface conformément au procédé selon la revendication 1, ledit programme informatique comprenant une pluralité de segments de code, **caractérisé par**
un premier segment de code destiné à calculer au moins une trajectoire le long de laquelle un dispositif de marquage se déplaçant de façon aléatoire(11,12, 22, 53) passe en mode holonome pour créer ladite présentation visuelle (51, 63),
dans lequel lesdites trajectoires sont calculées automatiquement à partir de données sources représentant ladite présentation visuelle (51, 63), et
un deuxième segment de code destiné à ordonner audit dispositif de marquage se déplaçant de façon non aléatoire de suivre sans interruption des trajectoires sur ladite surface de telle manière qu'au moins une ligne de contour de ladite présentation visuelle (51, 63) est continuellement créée sur ladite grande surface par le traitement de ladite surface le long des lignes de contour de ladite présentation visuelle (51, 63) avec ledit dispositif de marquage se déplaçant de façon non aléatoire (11,12, 22, 53) lors de son passage le long desdites trajectoires.

38. Utilisation d'un robot mobile en tant que dispositif de marquage se déplaçant de façon non aléatoire pour réaliser le procédé selon la revendication 1, en générant une présentation visuelle (51, 63) sur une grande surface sensiblement plane, où ledit robot mobile reçoit pour instruction de suivre en mode holonome des trajectoires, et ladite présentation visuelle (51, 63) est créée sur ladite surface en tant que somme desdites trajectoires, où au moins une, éventuellement courbée, ligne de contour de ladite présentation visuelle (51, 63) est créée sur ladite surface par le traitement en continu de ladite surface le long de ladite au moins une ligne de contour de ladite présentation visuelle (51, 63) avec ledit dispositif de marquage se déplaçant de façon non aléatoire lors de son passage le long desdites trajectoires.

39. Utilisation d'un robot mobile selon la revendication 39, dans laquelle lesdites trajectoires sont calculées automatiquement à partir d'un fichier de données informatique comprenant un fichier image mémorisant lesdites informations visuelles de ladite présentation visuelle (51, 63).
